# EUROPÄISCHE PATENTSCHRIFT

(11) **EP 2 496 636 B1**
(45) Veröffentlichungstag und Bekanntmachung des Hinweises auf die Patenterteilung: **15.05.2019**
(21) Anmeldenummer: 10773623.3
(22) Anmeldetag: 03.11.2010
(51) Int. Cl.: C08K 5/00, C08K 5/03, C08K 5/49, C08K 5/521, C08K 7/00, C08K 13/04, C08L 69/00, B32B 3/12, C08L 33/08

(54) **POLYCARBONATZUSAMMENSETZUNG MIT VERBESSERTER FLAMMWIDRIGKEIT FÜR EXTRUSIONSANWENDUNGEN**
MORE FLAME-RETARDANT POLYCARBONATE COMPOSITION FOR USE IN EXTRUDED PRODUCTS
COMPOSITION DE POLYCARBONATE À IGNIFUGEAGE AMÉLIORÉ POUR DES APPLICATIONS D'EXTRUSION

(30) Priorität: 05.11.2009 DE 102009052041
(43) Veröffentlichungstag der Anmeldung: 12.09.2012
(73) Patentinhaber: Covestro Deutschland AG, 51373 Leverkusen (DE)
(72) Erfinder: BLASCHKE, Ulrich, 47829 Krefeld (DE); MEYER, Alexander, 40489 Düsseldorf (DE); RÜDIGER, Claus, 47829 Krefeld (DE); KRAUTER, Berit, 51379 Opladen (DE)
(74) Vertreter: Levpat
(86) Internationale Anmeldenummer: PCT/EP2010/066735
(87) Internationale Veröffentlichungsnummer: WO 2011/054865

(56) Entgegenhaltungen:
- EP-A2- 0 628 600

## Beschreibung

Die vorliegende Erfindung betrifft Zusammensetzungen enthaltend Polycarbonat und 0,10 Gew.-% bis 4,00 Gew.-% eines Acrylat-basierenden Streuadditivs, 0,50 Gew.-% - 7,00 Gew.-% eines bromhaltigen Flammschutzmittels und 0,50 Gew.-% bis 7,00 Gew.-% eines Phosphor-basierten Flammschutzmittels für Extrusionsanwendungen.

Flammfest ausgerüstete Kunststoffformmassen werden für eine Vielzahl von Anwendungen eingesetzt. Typische Einsatzgebiete solcher Kunststoffe sind die Elektrotechnik und Elektronik, wo sie unter anderem zur Herstellung von Trägern spannungsführender Teile oder in Form von Fernseh- und Monitorgehäusen eingesetzt werden. Aber auch im Bereich der Innenverkleidungen von Schienenfahrzeugen oder Flugzeugen haben flammwidrig ausgerüstete Kunststoffe ihren festen Platz gefunden. Hierbei müssen die verwendeten Kunststoffe neben guten Flammschutzeigenschaften auch weitere positive Eigenschaften auf hohem Niveau zeigen. Hierzu gehören unter anderem mechanische Eigenschaften, wie zum Beispiel eine hohe Schlagzähigkeit sowie eine hinreichende Langzeitstabilität gegenüber thermischer Beanspruchung oder aber gegenüber einer möglichen Schädigung durch Lichteinwirkung. Hierbei ist eine solche Kombination an Eigenschaften nicht immer einfach zu erreichen. Zwar lässt sich in Kunststoffen mit Hilfe von Flammschutzmitteln in der Regel die gewünschte Flammwidrigkeit einstellen. Oft sind hierfür jedoch verhältnismäßig hohe Mengen erforderlich, was rasch zu einer drastischen Verschlechterung übriger Eigenschaften wie z.B. der Mechanik führt.

Lichtstreuende Eigenschaften des Kunststoffs lassen sich über die Zugabe von sogenannten Streuadditiven einstellen. Die Zugabe von organischen Streuadditiven, insbesondere solcher auf Acrylatbasis, verschlechtern jedoch die Brandeigenschaften der Zusammensetzung drastisch, und es müssten hohe Mengen eines Flammschutzmittels zugegeben werden, um die gewünschte Flammwidrigkeit einzustellen.

Es wurde nun gefunden, dass die Flammwidrigkeit von Polycarbonatzusammensetzungen enthaltend Streuadditive, das bedeutet von milchweiß-gefärbten bzw. transluzenten Polycarbonatzusammensetzungen, durch eine kombinierte Zugabe von bromierten und phosphathaltigen Flammschutzadditiven synergistisch erhöht werden kann.

Die US-A 2003/0069338 offenbart in diesem Zusammenhang flammgeschützte Formmassen, welche synergistische Kombinationen aus Cyanacrylaten und Flammschutzmitteln enthalten. Die so ausgerüsteten Formmassen zeichnen sich durch eine verbesserte Flammwidrigkeit und eine verbesserte Witterungsstabilität aus. Cyanacrylate können jedoch das Verarbeitungsverhalten von Polycarbonat - z.B. bei hohen Temperaturen - ungünstig beeinflussen. Mischungen mit Cyanacrylaten sind nicht Gegenstand der vorliegenden Anmeldung.

Die US-A 6649677 offenbart, dass sich die Flammwidrigkeit von Polycarbonat durch eine deutliche Reduktion der Viskosität des Polycarbonats und die Zugabe ganz bestimmter Mengen an Phosphor-Flammschutzmitteln verbessern lässt. Die Reduktion der Viskosität führt jedoch zu einer Erniedrigung der mechanischen Eigenschaften und ist daher nicht immer eine geeignete Methode zur Einstellung der Flammschutzeigenschaften. Zudem werden die in der hier offenbarten Erfindung verwendeten Flammschutzmittel der allgemeinen Formel (4) in der US-A 6649677 und die Kombination mit Brom-haltigen Flammschutzmitteln nicht beschrieben.

Die US-A 2004/0097619 offenbart Polymersubstrate, die verschiedene Stabilisatoren und verschiedene Flammschutzmittel, darunter auch Phosphor- oder halogenhaltige Flammschutzmittel enthalten. Diese Anmeldung betrifft jedoch keine Extrusionsmaterialien, die Acrylatpartikel enthalten. Eine Lehre zum Handeln lässt sich somit aus der US-A 20040097619 für die vorliegende Problemstellung nicht ableiten.

Die JP-A 06041416 beschreibt Polycarbonate enthaltend Flammschutzmittel auf Brombasis. Kombinationen von Flammschutzmitteln werden nicht beschrieben. Hohe Bromgehalte sind jedoch in der Verarbeitung von Thermoplasten unerwünscht, sie neigen bei der Verarbeitung zur Ausdünstung korrosiver und gesundheitsschädlicher Bromdämpfe.

Bevorzugt sind die erfindungsgemäßen Platten mehrschichtig aufgebaut. So sind sie bevorzugt mit einer UV-Schutzschicht ausgestattet, welche bevorzugt im Coextrusionverfahren aufgebracht wird. Derartige Extrusionsmaterialien werden in der Literatur beschrieben.

Die US-A 2006/0234061 beschreibt Mehrschichtsysteme umfassend eine UV-Schutzschicht, welche Polyalkylen(meth)acrylat und Verbindungen vom Typ der 2,4-Bis-(4-phenylphenyl)-6-(2-hydroxypgenyl)-1,3,5-triazine enthält sowie eine zweite, Polycarbonat enthaltende Schicht. Jedoch kann mit diesen Systemen keine Verbesserung in den Flammschutzeigenschaften erreicht werden.

In der US-A 6255483 sowie in der GB 2317174 A werden biphenylsubstituierte Triazinverbindungen beschrieben. Mischungen mit weiteren Additiven werden in allgemeiner Form erwähnt. Eine spezifische Lehre zur Bereitstellung von Zusammensetzungen mit verbesserten Flammschutzeigenschaften ist dem Dokument allerdings nicht zu entnehmen. Die EP-A 628600 offenbart eine Polycarbonatzusammensetzung mit Tetrabromo-Bisphenol A als Flammschutzmittel. Eine Aufgabe der vorliegenden Erfindung ist die Bereitstellung von Zusammensetzungen enthaltend Polycarbonat, welche verbesserte Flammschutzeigenschaften in Kombination mit hoher Streuwirkung aufweisen. Die Zusammensetzungen sollen sich für milchweiß-eingefärbte Extrusionsprodukte eignen.

Im Rahmen der vorliegenden Erfindung wurde nun überraschenderweise gefunden, dass die Flammwidrigkeit von Polycarbonat-Extrusionskörpern enthaltend Acrylat-basiertes Streuadditiv durch Zugabe einer Kombination von bromiertem und phosphathaltigem Flammschutzmittel erhöht werden kann. Gleichzeitig können gute Polymer-Eigenschaften wie Wärmeformbeständigkeit (z.B. bestimmbar durch die Vicat-Temperatur) und ein niedriger Bromgehalt eingehalten werden.

Die vorliegende Erfindung betrifft somit Zusammensetzungen gemäss Anspruch 1.

Die Gew.-%-Angaben beziehen sich jeweils auf die entsprechende Gesamtzusammensetzung.

Die beiden Flammschutzmittel b) und c) können zu je gleichen Anteilen eingesetzt werden, oder die Menge an bromhaltigen Flammschutzmitteln b) ist größer als die Menge an phosphathaltigem Flammschutzmitteln c) oder die Menge an bromhaltigen Flammschutzmitteln b) ist geringer als die Menge an phosphathaltigen Flammschutzmitteln c). Bevorzugt ist der Einsatz einer größeren Menge an phosphathaltigen Flammschutzmitteln c) als an bromhaltigen Flammschutzmitteln b). Dabei beziehen sich alle Mengenangaben auf Gewichtsprozent.

Solche Zusammensetzungen lassen sich in diversen Anwendungen vorteilhaft einsetzen. Die erfindungsgemäßen Zusammensetzungen eignen sich vor allem für den Einsatz in Form von Platten für Architektur- oder Industrieverscheibungen wie z.B. Wand- und Dachbekleidungen, Lichtkuppeln oder bruchsicheren Verscheibungen, als Verkleidungen von Schienenfahrzeug- und Flugzeuginnenräumen, an die jeweils erhöhte Anforderungen an die Flammwidrigkeit gestellt werden. Diese Platten lassen sich insbesondere durch Extrusion herstellen. Hierbei kann es sich um massive Platten, bevorzugt in einer Dicke von 1 bis 10 mm, oder um Hohlkammerplatten, wie z.B. Stegplatten oder Mehrfachstegplatten oder Hohlprofile mit besonderer Geometrie handeln.

In der vorliegenden Anmeldung wird die extrudierte Platte auch als "Basisschicht" bezeichnet, die zu ihrer Herstellung verwendete Zusammensetzung als "Basismaterial". Die Basisschicht kann gegebenenfalls noch mit weiteren (Schutz-)Schichten und insbesondere einer einseitigen oder beidseitigen Deckschicht versehen sein. Diese Schichten werden bevorzugt über Coextrusion hergestellt ("Coex-Schicht").

Formteile aus Bisphenol-A-Polycarbonat sind normalerweise schwer entflammbar und können häufig bereits ohne spezielle flammhemmende Additive die Klassifizierung V2 gemäß Underwriters Laboratories Subject 94 erzielen. Mit flammhemmenden Additiven, Halogenadditiven oder Antidrippingmitteln kann gegebenenfalls sogar die Klassifizierung V0 nach UL Subject 94 erzielt werden.

Insbesondere für extrudierte Artikel für den Einsatz im Baubereich werden jedoch weitere Tests gefordert.

Die für die Bundesrepublik Deutschland verbindliche Norm DIN 4102 teilt die Baustoffe nach ihrem Brandverhalten in folgende Klassen ein: Baustoffklasse A nicht brennbar, Baustoffklasse B1 schwer entflammbar, Baustoffklasse B2 normal entflammbar, Baustoffklasse B3 leicht entflammbar. Brennbare Baustoffe werden in die Klasse B1 eingestuft, wenn sie die Prüfung im Brandschacht gemäß DIN 4102 bestehen.

Dünne Massivplatten bis 4 mm Dicke für Innenanwendungen oder dünne Stegplatten und Profile bis zu einer Dicke von 10 bis 16 mm aus Bisphenol-A-Polycarbonat können im Brandschachttest ein B1 erreichen. Für dicke Massivplatten mit einer Dicke größer 4 mm oder dickere Stegplatten und Profile mit Dicken größer 16 mm lässt sich häufig nur ein B2 für Außenanwendungen erreichen, insbesondere, wenn die Stegplatten komplizierte Profile und/oder ein hohes Flächengewicht aufweisen und dazu noch mit organischen Additiven eingefärbt sind.

Mit den hier beschriebenen Zusammensetzungen können extrudierte Artikel hergestellt werden, die, selbst wenn sie ein kompliziertes Profil und/oder hohe Flächengewichte aufweisen, überraschenderweise die oben genannten Erfordernisse für eine B1 -Einstufung erfüllen.

Insbesondere lassen sich mit der erfindungsgemäßen Zusammensetzung Platten mit Flächengewichten von größer oder gleich 2,4 kg/m², größer oder gleich 2,5 kg/m² und bzw. oder größer oder gleich 2,7 kg/m² herstellen. Weitere bevorzugte Flächengewichte der Platten sind größer oder gleich 2,8 kg/m², größer oder gleich 3,1 kg/m² und bzw. oder größer oder gleich 3,4 kg/m². In anderen Ausführungsformen sind bevorzugte Platten solche mit einem Flächengewicht von größer oder gleich 3,5 kg/m² und bzw. oder größer oder gleich 3,7 kg/m² und Platten mit einem Flächengewicht von größer oder gleich 4,2 kg/m². Besonders bevorzugt sind auch Platten mit den vorgenannten Flächengewichten, wenn es sich um Stegmehrfachplatten handelt. Auch unabhängig von ihrem Flächengewicht sind im Rahmen der vorliegenden Erfindung Stegplatten besonders bevorzugt.

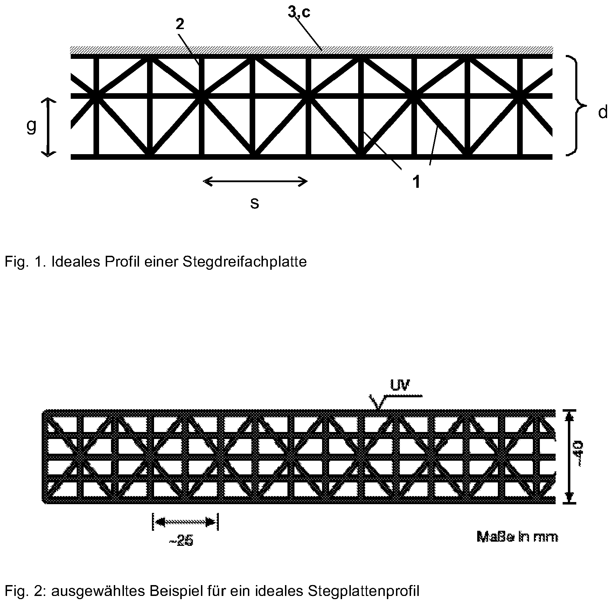

Ein Beispiel einer Stegmehrfachplatte (Dreifachplatte mit X-Profil) zusätzlich enthaltend eine Coextrusionsschicht (3) ist in Figur 1 dargestellt. Die Stegplatte besteht aus Stegen (1) und Gurten (2), wobei jeweils der oberste und der unterste Gurt die Außenschichten bilden. Stehen nicht alle Stege parallel zueinander senkrecht zu den Gurten, sondern kreuzen sich an einem inneren Gurt, wird das Profil als X-Profil bezeichnet. Der Abstand zwischen zwei parallelen Stegen an den Außengurten beträgt s, der Abstand der Gurte (2) ist mit g gekennzeichnet. Die Gesamtdicke der Platte von Außengurt zu Außengurt ist mit d gekennzeichnet, die Dicke der Coextrusionsschicht (3) ist mit c gekennzeichnet.

Aus der erfindungsgemäßen Zusammensetzung werden beispielsweise Platten mit folgenden Plattengeometrien hergestellt:
- 3fach Stegplatte mit einer Dicke von 12 bis 20 mm und einem Stegabstand von 12 bis 20 mm
- 6fach Stegplatte mit einer Dicke von 12 bis 22 mm und einem Stegabstand von 12 bis 22 mm
- 3fach Stegplatte mit einem X-Profil und einer Dicke von 12 bis 20 mm wobei die X-Struktur (gebildet von 3 Stegen) eine Breite von 20 bis 30 mm aufweist.
- 5fach Stegplatte mit einem X-Profil und einer Dicke von 20 bis 50 mm wobei die X-Struktur (gebildet von 3 Stegen) eine Breite von 20 bis 30 mm aufweist.
- 5fach Stegplatte mit einem M-Profil und einer Dicke von 20 bis 50 mm wobei die Stege einen Abstand von 15 bis 25 mm aufweisen.

Ein weiteres Ausführungsbeispiel ist in Figur 2 dargestellt, welche eine ideale 5-fach Stegplatte mit X-Profil zeigt.

Die vorliegende Erfindung betrifft auch Verfahren zur Herstellung einer erfindungsgemäßen Zusammensetzung, dadurch gekennzeichnet, dass Polycarbonat und

Zusatzstoffe gemäss Anspruch 1 zusammengeführt und vermischt werden, gegebenenfalls in Lösungsmittel, wobei gegebenenfalls homogenisiert wird und das Lösungsmittel entfernt wird. Gegebenenfalls können einzelne Additive mit einem Pulver- oder granulatförmigen Polycarbonat vorgemischt und dann zugegeben werden. Die Gew.-%-Angaben beziehen sich jeweils auf die entsprechende Gesamtzusammensetzung.

Polycarbonate für die erfindungsgemäßen Zusammensetzungen sind Homopolycarbonate, Copolycarbonate, thermoplastische Polyestercarbonate und Blends bzw. Mischungen dieser Polymere. Insbesondere bevorzugt ist aromatisches lineares und bzw. oder verzweigtes aromatisches Polycarbonat, ganz besonders bevorzugt sind Mischungen aus verzweigtem und linearem Polycarbonat.

Es werden Mischungen eingesetzt, die mindestens 70 Gew.-% lineares Polycarbonat und mindestens 10,00 Gew.-% verzweigtes Polycarbonat enthalten. Die Gew.-%-Angeben beziehen sich hierbei jeweils auf die entsprechende Gesamtzusammensetzung.

Die erfindungsgemäßen linearen bzw. verzweigten Polycarbonate und Copolycarbonate haben im Allgemeinen mittlere Molekulargewichte (Gewichtsmittel) von 2.000 bis 200.000, bevorzugt 3.000 bis 150.000, insbesondere 5.000 bis 100.000, ganz besonders bevorzugt 8.000 bis 80.000, insbesondere 12.000 bis 70.000 g/mol (bestimmt mittels Gelpermeationschromatographie mit Polycarbonat-Eichung).

Für die vorliegende Erfindung sind Polycarbonate mit einem gewichtsmittleren Molekulargewicht M̅_{w} von 16.000 bis 40.000 g/mol besonders bevorzugt.

Zur Herstellung von Polycarbonaten für die erfindungsgemäßen Zusammensetzungen sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird zunächst beispielhaft an dem Phasengrenzflächenverfahren beschrieben.

Als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxy-phenyl)sulfone, Bis(hydroxyphenyl)ketone und α,α'-Bis(hydroxyphenyl)-di-isopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl)diphenol (Bisphenol M), 4,4-(para-Phenylendiisopropyl)diphenol, N-Phenyl-Isatinbisphenol, 1,1-Bis-(4-hydroxyphenyl)-3,3,5-trimethylcyclohexan (BP-TMC), Bisphenole vom Typ der 2-Hydrocarbyl-3,3-bis(4-hydroxyaryl)phthalimidine, insbesondere 2-Phenyl-3,3-bis(4-hydroxyphenyl)phthalimidin, sowie gegebenenfalls deren Gemische. Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol. Vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Isatinbiskresol, Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-b enzol; 1,1,1-Tri-(4-hydroxyphenyl)-ethan; Tri-(4-hydroxyphenyl)-phenyl-methan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropylb enzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweiger, können mit den Diphenolen zusammen eingesetzt werden aber auch in einem späteren Stadium der Synthese zugegeben werden.

Es können Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol-%, bevorzugt 2-10 Mol-%, je Mol Bisphenol. Bevorzugt sind Phenol, 4-tert.-Butylphenol bzw. Cumylphenol.

Kettenabbrecher können getrennt oder aber auch zusammen mit dem Bisphenol den Synthesen zugesetzt werden.

Das erfindungsgemäß besonders bevorzugte Polycarbonat ist Bisphenol-A-Homopolycarbonat.

Alternativ können die erfindungsgemäßen Polycarbonate auch nach dem Schmelzumesterungsverfahren hergestellt werden. Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden die bereits beim Phasengrenzflächenverfahren beschriebenen aromatischen Dihydroxyverbindungen, mit Kohlensäurediestern unter Zuhilfenahme von geeigneten Katalysatoren und gegebenenfalls weiteren Zusatzstoffen in der Schmelze umgeestert.

Kohlensäurediester im Sinne der Erfindung sind solche der Formel (1) und (2) 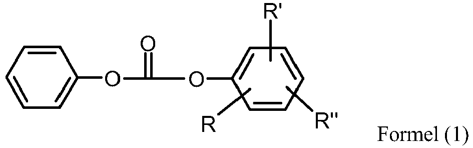 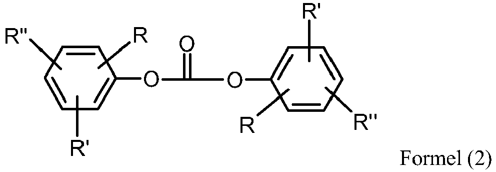 wobei
R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
   beispielsweise
Diphenylcarbonat, Butylphenyl-phenylcarbonat, Di-Butylphenylcarbonat, Isobutylphenylphenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenylphenylcarbonat, Di-(n-Hexylphenyl)carbonat, Cyclohexylphenyl-phenylcarbonat , Di-Cyclohexylphenylcarbonat, Phenylphenol-phenylcarbonat, Di-Phenylphenolcarbonat, Isooctylphenylphenylcarbonat, Di-Isooctylphenylcarbonat, n-Nonylphenyl-phenylcarbonat, Di-(n-Nonylphenyl)carbonat, Cumylphenyl-phenylcarbonat, Di-Cumylphenylcarbonat, Naphthylphenyl-phenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenyl-phenylcarbonat, Di-(4-Phenoxyphenyl)carbonat, 3-Pentadecylphenylphenylcarbonat, Di-(3-Pentadecylphenyl)carbonat, Tritylphenyl-phenylcarbonat, Di-Tritylphenylcarbonat,
   bevorzugt
Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat, besonders bevorzugt Diphenylcarbonat.

Es können auch Mischungen der genannten Kohlensäurediester eingesetzt werden.

Der Anteil an Kohlensäureester beträgt 100 bis 130 mol-%, bevorzugt 103 bis 120 mol-%, besonders bevorzugt 103 bis 109 mol-%, bezogen auf die Dihydroxyverbindung.

Als Katalysatoren im Sinne der Erfindung werden im Schmelzumesterungsverfahren wie in der genannten Literatur beschrieben basische Katalysatoren wie beispielsweise Alkali- und Erdalkalihydroxide und -oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der Formel (3) 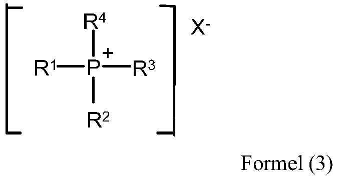 wobei
- R¹⁻⁴: dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und
- X-: ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann.

### Bevorzugte Katalysatoren sind

Tetraphenylphosphoniumchlorid,
Tetraphenylphosphoniumhydroxid,
Tetraphenylphosphoniumphenolat,
besonders bevorzugt ist Tetraphenylphosphoniumphenolat.

Die Katalysatoren werden bevorzugt in Mengen von 10⁻⁸ bis 10⁻³ mol, bezogen auf ein mol Bisphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 bis 250°C, bevorzugt 100 bis 230°C, besonders bevorzugt 120 bis 190°C unter normalem Druck in 0 bis 5 Stunden, bevorzugt 0,25 bis 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse M_{W} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 bis 320°C, bevorzugt 270 bis 295°C und einem Druck von <2 mm Hg das Polycarbonat hergestellt. Hierbei wird der Rest an Brüden aus dem Prozess entfernt.

Die Katalysatoren können auch in Kombination (zwei oder mehrere) miteinander eingesetzt werden.

Beim Einsatz von Alkali-/Erdalkalimetallkatalysatoren kann es vorteilhaft sein, die Alkali-/ Erdalkalimetallkatalysatoren zu einem späteren Zeitpunkt (z. B. nach der Oligocarbonatsynthese bei der Polykondensation in der zweiten Stufe) zuzusetzen.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Analog des Phasengrenzflächenverfahrens können durch Einsatz mehrfunktioneller Verbindungen verzweigte Poly- oder Copolycarbonate hergestellt werden.

Den erfindungsgemäßen Polycarbonaten und Copolycarbonaten können noch andere Kunststoffe wie Polyamide, Polyimide, Polyesteramide, Polyacrylate und Polymethacrylate wie zum Beispiel Polyalkyl(meth)acrylate und hier insbesondere Polymethylmethacrylat, Polyacetale, Polyurethane, Polyolefine, halogenhaltige Polymere, Polysulfone, Polyethersulfone, Polyetherketone, Polysiloxane, Polybenzimidazole, Harnstoff-Formaldehyd-Harze, Melamin-Formaldehydharze, Phenol-Formaldehyd-Harze, Alkydharze, Epoxidharze, Polystyrole, Copolymere des Styrols oder des alpha-Methylstyrols mit Dienen oder Acrylderivaten, Pfropfpolymerisate auf Basis Acrylnitril/-Butadien/- Styrol oder auf Acrylatkautschuk basierende Pfropfcopolymerisate (s. beispielsweise die in EP-A 640 655 beschriebenen Pfropfpolymerisate) beziehungsweise Siliconkautschuke in bekannter Weise zugemischt werden, beispielsweise durch Compoundierung.

Weiterhin können aromatische Polyester bzw. aromatisch/aliphatische, thermoplastische Polyester, deren Säurekomponente zu mindestens 85 Mol-% aus Terephthalsäure und deren Diolkomponente zu mindestens 80 Mol-% aus Butandiol-1, 4, Ethandiol-1,2 und/oder Cyclohexandimethanol-1,4 bestehen, zugesetzt werden. Dies sind z.B. Polyester mit Butylenterephthalat-, Ethylenterephthalat, und/oder Cyclohexandimethanolterephthalat-Einheiten.

Die Diolkomponente dieser Polyester kann bis zu 20 Mol-% aus anderen aliphatischen Diolen mit 3 bis 12 C-Atomen oder aus cycloaliphatischen Diolen mit 6 bis 21 C-Atomen bestehen. Beispielsweise sind hier Propandiol-1,3-, Neopentylglykol, Pentandiol-1,5, Hexandiol-1,6, 3-Methylpentandiol-2,4, 2-Methylpentandiol-2,4, 2,2,4-Trimethylpentandiol-1,3 zu nennen. Neben Terephthalsäure können in der Säurekomponente bis zu 15 Mol-% Dicarbonsäuren, z.B. Isophthalsäure, Adipinsäure, Succinsäure, Sebacinsäure, Naphthalin-2,6-dicarbonsäure, Diphenyldicarbonsäure, Azelainsäure, Cyclohexandiessigsäure enthalten sein.

Bevorzugt werden Polybutylenterephthalate eingesetzt, beispielsweise Pocan® 1300, ein aromatischer Polyester erhältlich bei der Firma Lanxess AG.

Für die in der erfindungsgemäßen Zusammensetzung enthaltenden Acrylat-basierten Streuadditive werden bevorzugt Polymethylmethacrylat - haltige Additive eingesetzt, z.B. polymere Teilchen aus Polymethylmethacrylat und Polybutylacrylat mit Kern-Schale-Morphologie, beispielsweise erhältlich als Paraloid® EXL 5136 oder Paraloid® EXL 5137 von der Firma Rohm&Haas, oder auch teil- oder vollvernetzte spherische oder nicht-spherische Acrylatpartikel, wie z.B. solche aus der Techpolymer® MBX Serie der Fa. Sekisui Plastics.

Streuadditive mit Kern-Schale-Morphologie sind beispielsweise in EP 0 634 445 B1 als "polymeric particle (b)" beschrieben.

Die Streuadditive haben im allgemeinen einen durchschnittlichen Teilchendurchmesser von 2 bis 15 Mikrometer. Dabei ist unter dem Durchschnitt der Zahlendurchschnitt der Teilchendurchmesser und unter dem Teilchendurchmesser der Durchmesser einer Kugel mit einem dem Teilchen äquivalenten Volumen zu verstehen. Bevorzugt haben wenigstens 90 % einen Durchmesser von mehr als 2 Mikrometer. Die Streuadditive werden beispielsweise als frei fließendes Pulver oder in kompaktierter Form eingesetzt.

Bei den weiterhin in der erfindungsgemäßen Zusammensetzung eingesetzten bromierten Flammschutzmitteln handelt es sich um TetrabromBisphenol-A Oligomere, z.B. Tetrabrombisphenol-A oligocarbonat BC-52®, BC-58®, BC-52HP® der Firma Chemtura.

Die in der erfindungsgemäßen Zusammensetzung enthaltenden Phosphor-basierten Flammschutzmittel bestehen bevorzugt aus oligomeren Phosphorsäureestern, die sich von folgender Formel (4) ableiten: 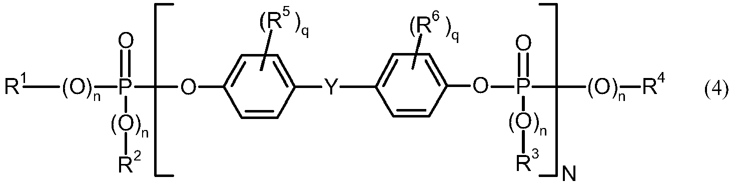 worin
- R¹, R², R³ und R⁴,: unabhängig voneinander gegebenenfalls durch Halogen substituiertes C₁-C₈-Alkyl, jeweils gegebenenfalls durch Halogen und/oder Alkyl substituiertes C₅-C₆-Cycloalkyl, C₆-C₁₀-Aryl oder C₇-C₁₂-Aralkyl,
- n: unabhängig voneinander 0 oder 1,
- q: unabhängig voneinander 0, 1, 2, 3 oder 4,
bedeuten und
- N: 0,50 bis 4,00, vorzugsweise 0,90 bis 2,50, insbesondere 1,00 bis 1,15 ist,
- R⁵ und R⁶: unabhängig voneinander C₁-C₄-Alkyl, vorzugsweise Methyl oder Halogen, vorzugsweise Chlor und/oder Brom bedeuten,
- Y: C₁-C₇-Alkyliden, C₁-C₇-Alkylen, C₅-C₁₂-Cycloalkylen, C₅-C₁₂-Cycloalkyliden, -O-, -S-, -SO-, -SO₂-, -CO- oder einen Rest der Formel (5) oder (6) 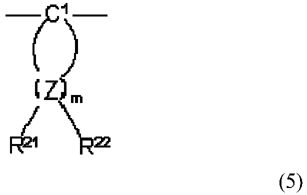 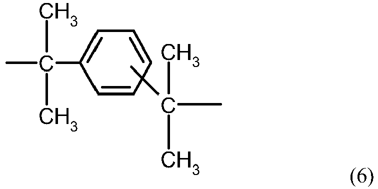
mit
Z = Kohlenstoff und
R²¹ und R²² für jedes Z individuell wählbar, unabhängig voneinander Wasserstoff oder C1-C6-Alkyl, vorzugsweise Wasserstoff, Methyl oder Ethyl, und
m einer ganze Zahl von 4 bis 7, bevorzugt 4 oder 5,
mit der Maßgabe, dass an mindestens einem Atom Z R²¹ und R²² gleichzeitig Alkyl sind, bedeutet.

Die erfindungsgemäß geeigneten Phosphorverbindungen gemäß Formel (4) sind generell bekannt (s. beispielsweise Ullmanns Encyklopädie der Technischen Chemie, Bd. 18, S. 301 ff. 1979; Houben-Weyl, Methoden der Organischen Chemie, Bd. 12/1, S. 43; Beilstein Bd. 6, S. 177).

Bevorzugte Substituenten R¹ bis R⁴ umfassen Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl. Besonders bevorzugt sind Methyl, Ethyl, Butyl, Phenyl und Naphthyl.

Die aromatischen Gruppen R¹, R², R³ und R⁴ können mit Halogen und/oder C₁-C₄-Alkyl substituiert sein. Besonders bevorzugte Aryl-Reste sind Kresyl, Phenyl, Xylenyl, Propylphenyl oder Butylphenyl sowie auch die bromierten und chlorierten Derivate davon.

R⁵ und R⁶ bedeuten unabhängig voneinander vorzugsweise Methyl oder Brom.

Y steht vorzugsweise für C₁-C₇-Alkylen, insbesondere für Isopropyliden oder Methylen, ganz besonders bevorzugt für Isopropyliden.

n in der Formel (4) kann unabhängig voneinander 0 oder 1 sein, vorzugsweise ist n gleich 1. q kann 0, 1, 2, 3 oder 4 sein, vorzugsweise ist q 0, 1 oder 2.

N kann Werte von 0,50 bis 4,00, vorzugsweise 0,90 bis 2,50, insbesondere 1,00 bis 1,15 annehmen. Als erfindungsgemäßes Flammschutzmittel gemäß Formel (4) können auch Mischungen verschiedener Phosphate eingesetzt werden. In diesem Fall ist N ein Durchschnittswert. In diesem Gemisch können auch Monophosphorverbindungen (N=0) enthalten sein.

Vorzugsweise ist der Anteil der Monophosphorverbindungen (N=0) im Flammschutzmittel gemäß Formel (4) kleiner als oder gleich 5,00 Gew.-%, bevorzugt kleiner als oder gleich 4,00 Gew.-%, besonders bevorzugt kleiner als oder gleich 3,00 Gew.-%.

Die mittleren N-Werte können bestimmt werden in dem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für N berechnet werden. Im Rahmen der vorliegenden Erfindung werden die Phosphorverbindungen der Formel (4) in Mengen von 2,50 Gew.-% bis 5,50 Gew.-% eingesetzt.

Die genannten Phosphorverbindungen sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Besonders bevorzugt ist im Rahmen der vorliegenden Erfindung Bisphenol-A-diphosphat. Bisphenol-A-diphosphat ist u.a. als Reofos® BAPP (Firma Chemtura, Indianapolis, USA), NcendX® P-30 (Firma Albemarle, Baton Rouge, Louisiana, USA), Fyrolflex® BDP (Firma Akzo Nobel, Arnheim, Niederlande) oder CR 741® (Firma Daihachi, Osaka, Japan) kommerziell erhältlich.

Weitere Phosphorsäureester, die im Rahmen der vorliegenden Erfindung eingesetzt werden können, sind zudem Triphenylphosphat, welches unter anderem als Reofos® TPP (Firma Chemtura), Fyrolflex® TPP (Firma Akzo Nobel) oder Disflamoll® TP (Firma Lanxess) angeboten wird, sowie Resorcindiphosphat. Resorcoindiphosphat lässt sich als Reofos RDP (Firma Chemtura) oder Fyrolflex® RDP (Firma Akzo Nobel) käuflich erwerben.

Den erfindungsgemäßen Polycarbonaten sowie den gegebenenfalls weiteren enthaltenen Kunststoffen können noch die für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten und das Fließverhalten noch durch Zusatz externer Entformungsmittel und Fließmittel verbessert werden (z. B. niedermolekulare Carbonsäureester, Kreide, Quarzmehl, Glas- und Kohlenstofffasern, Pigmente und deren Kombination). Für Polycarbonat üblicherweise verwendete Additive werden z. B. in WO 99/55772, S. 15 - 25, EP 1 308 084 und in den entsprechenden Kapiteln des "Plastics Additives Handbook" , ed. Hans Zweifel, 5th Edition 2000, Hanser Publishers, Munich beschrieben.

Die gegebenenfalls zur weiteren Erhöhung der Flammwidrigkeit der erfindungsgemäßen Zusammensetzung zugesetzten Salze sind beispielsweise Alkali- bzw. Erdalkalisalze von aliphatischen bzw. aromatischen Sulfonsäure- Sulfonamid- und Sulfonimidderivaten, z.B. Natrium-oder Kaliumperfluorbutansulfat, Natrium- oder Kaliumperfluormethansulfonat, Natrium- oder Kaliumperfluoroctansulfat, Natrium-oder Kalium-2,5-dichlorbenzolsulfat, Natrium- oder Kalium-2,4,5-trichlorbenzolsulfat, Natrium- oder Kalium-methylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium-oder Kalium-2,4-dichlorbenzoat, Lithium-phenylphosphonat, Natrium-oder Kalium-diphenylsulfon-sulfonat, Natrium- oder Kalium-2-formylbenzolsulfonat, Natrium- oder Kalium-(N-benzolsulfonyl)-benzolsulfonamid. Trinatrium- oder Trikalium-hexafluoroaluminat, Dinatrium- oder Dikalium-hexafluorotitanat, Dinatrium- oder Dikalium-hexafluorosilikat, Dinatrium- oder Dikalium-hexafluorozirkonat, Natrium- oder Kalium-pyrophosphat, Natrium- oder Kalium-metaphosphat, Natrium- oder Kalium-tetrafluoroborat, Natrium- oder Kaliumhexafluorophosphat, Natrium- oder Kalium- oder Lithiumphosphat, N-(p-tolylsulfonyl-)-p-toluolsulfimid-Kaliumsalz, N-(N'-Benzylaminocarbonyl)-sulfanylimid-Kaliumsalz.

Bevorzugt werden Natrium- oder Kaliumperfluorbutansulfat, Natrium- oder Kaliumperfluoroctansulfat, Natrium- oder Kalium-diphenylsulfon-sulfonat und Natrium oder Kalium-2,4,6-trichlorbenzoat und N-(p-tolylsulfonyl-)-p-toluolsulfimid-Kaliumsalz, N-(N'-Benzylaminocabonyl)-sulfanylimid-Kaliumsalz. Ganz besonders bevorzugt sind Kalium-nona-fluor-1-butansulfonat und Natrium- oder Kalium-diphenylsulfonsulfonat. Kaliumperfluorbutansulfonat ist u.a. als Bayowet®C4 (Firma Lanxess, Leverkusen, Deutschland), RM64 (Firma Miteni, Italien) oder als 3M™ Perfluorobutanesulfonyl Fluoride FC-51 (Firma 3M, USA) kommerziell erhältlich. Ebenfalls sind Mischungen der genannten Salze geeignet.

Als Antitropfmittel kann den Formmassen zusätzlich Polytetrafluorethylen (PTFE) zugefügt werden. Letzteres ist in diversen Produktqualitäten kommerziell verfügbar. Hierzu zählen Additive wie Hostaflon® TF2021 oder aber PTFE-Blends wie Metablen® A-3800.

Des weiteren können zusätzlich chlorhaltige Flammschutzmittel wie zum Beispiel Tetrachlorphthalimide eingesetzt werden.

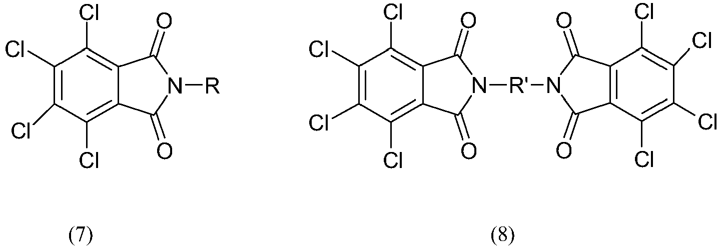

Als geeignete Tetrachlorphthalimide im Sinne der Erfindung gemäß Formel (7) seien beispielsweise genannt: N-Methyl-tetrachlorphthalimid, N-ethyl- tetrachlorphthalimid, N-Propyltetrachlorphthalimid, N-Isopropyl-tetrachlorphthalimid, N-Butyl-tetrachlorphthalimid, N-Isobutyltetrachlorphthalimid, N-Phenyl- tetrachlorphthalimid, N- (4-Chlorphenyl) tetrachlorphthalimid, N-(3,5-Dichlorphenyl)-tetrachlorphthalimid N-(2,4,6-Trichlorphenyl)-tetrachlorphthalimid, N-Naphthyl-tetrachlorphthalimid. Als geeignete Tetrachlorphthalimide im Sinne der Erfindung gemäß Formel (7) seien beispielsweise genannt: N,N'-Ethylen-di-tetrachlorphthalimid. N,N'-Propylen-di-tetrachlorphthalimid, N,N'-Butylen-di-tetrachlorphthalimid, N,N'-p-Phenylen-di-tetrachlorphthalimid, 4,4'-Di-tetrachlorphthalimido-diphenyl, N-(Tetrachlorphthalimido)-tetrachlorphthalimid. Insbesondere geeignet im Sinne der Erfindung sind N-Methyl- sowie N-Phenyltetrachlorphthalimid, N,N'-Ethylen-di-tetrachlorphthalimid und N-(Tetrachlorphthalimido)-tetrachlorphthalimid. Mischungen verschiedener Tetrachlorphthalimide der Formeln (7) oder (8) sind gleichfalls zu verwenden.

Die brom- beziehungsweise chlorhaltigen Flammschutzmittel können auch in Kombination mit Antimontrioxid eingesetzt werden.

Hierbei ist die vorliegende Erfindung nicht auf die genannten Flammschutzmittel beschränkt, vielmehr können auch weitere flammhemmende Additive, wie z.B. in J. Troitzsch, "International Plastics Flammability Handbook", Hanser Verlag, München 1990 beschrieben, eingesetzt werden.

Im Rahmen der vorliegenden Erfindung enthalten die erfindungsgemäßen Zusammensetzungen besonders bevorzugt eine Flammschutzmittelkombination aus einem Phosphorsäureester gemäß Formel (4) und Tetrabrombisphenol-A-oligocarbonat.

Die Herstellung einer Zusammensetzung enthaltend Polycarbonat und die genannten Zuschlagstoffe und Additive kann mit gängigen Einarbeitungsverfahren erfolgen, beispielsweise durch Vermischen von Lösungen der Zuschlagstoffe und einer Lösung des Polycarbonats in geeigneten Lösungsmitteln wie Dichlormethan, Halogenalkanen, Halogenaromaten, Chlorbenzol und Xylolen. Die Substanzgemische werden dann bevorzugt in bekannter Weise durch Extrusion homogenisiert. Die Lösungsgemische werden bevorzugt in bekannter Weise durch Ausdampfen des Lösungsmittels und anschließender Extrusion aufgearbeitet, beispielsweise compoundiert.

Zudem kann die Zusammensetzung in üblichen Mischvorrichtungen wie Schneckenextrudern (zum Beispiel Zweischneckenextruder, ZSK), Kneter, Brabender- oder Banbury-Mühlen gemischt und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Nach der Herstellung und Aufarbeitung der erfindungsgemäßen Zusammensetzung können diese zu beliebigen Formkörpern verarbeitet werden, beispielsweise durch Extrusion, Spritzguss oder Extrusionsblasformen. Bevorzugt werden die Zusammensetzungen zu (co)extrudierten Formkörpern, wie z.B. Platten verarbeitet.

Als Basismaterial für diese Platten kann lineares und / oder verzweigtes Polycarbonat eingesetzt werden.

Für Massivplatten wird bevorzugt lineares Polycarbonat verwendet.

Für Stegmehrfachplatten kommt lineares und / oder verzweigtes Polycarbonat zum Einsatz. Bevorzugt werden Mischungen eingesetzt, die mindestens 50,00 Gew.-%, bevorzugt mindestens 60,00 Gew.-%, besonders bevorzugt mindestens 70 Gew.-% lineares Polycarbonat und mindestens 10,00 Gew.-% verzweigtes Polycarbonat enthalten.

Bevorzugt bestehen die Platten zu mindestens 80 Gew.-% aus (verzweigtem und linearem in Summe) Bisphenol-A-Polycarbonat.

Die Platten im Sinne der Erfindung enthalten bevorzugt mindestens eine Deckschicht enthaltend UV-Absorber. Ferner kann die Basisschicht ebenfalls UV-Absorber enthalten. Deckschichten können ein- oder beidseitig aufgetragen sein. Die Dicke der coextrudierten Deckschichten liegt gewöhnlich zwischen 5 und 150 µm, bevorzugt zwischen 20 und 100 µm.

Die Dicke der Deckschicht kann über die Breite geringfügig schwanken. Das Polycarbonat der Deckschicht kann aus linearem und bzw. oder verzweigtem Polycarbonat bestehen, bevorzugt wird lineares eingesetzt.

Die Deckschicht enthält bevorzugt einen oder mehrere UV-Absorber ausgewählt aus der Gruppe enthaltend die folgenden Substanzen: Triazine, Benztriazole, Cyanacrylate und Bismalonate.

Die Deckschicht enthält ganz besonders bevorzugt einen oder mehrere UV-Absorber ausgewählt aus folgenden Substanzen: 2-[2-Hydroxy-4-(2-ethylhexyl)oxy]phenyl-4,6-di(4-phenyl)phenyl-1,3,5-triazin (CAS No. 204583-39-1); 2-(2H-benzotriazol-2-yl)-4-(1,1-dimethylethyl)-6-(1-methylpropyl)-phenol (CAS No. 36437-37-3), welches unter dem Namen Tinuvin® 350 bei der Fa. Ciba kommerziell erhältlich ist; 2,2'-methylenebis[6-(2H-benzotriazol-2-yl)-4-(1,1,3,3-tetramethylbutyl)-phenol (CAS No. 103597-45-1), welches unter dem Namen Tinuvin® 360 bei der Fa. Ciba oder dem Namen ADK Stab LA31® bei der Firma Adeka-Palmarole kommerziell erhältlich ist; 2-(4,6-diphenyl-1,3,5-triazin-2-yl)-5-(hexyloxy)-phenol (CAS No. 147315-50-2), welches unter dem Namen Tinuvin® 1577 bei der Fa. Ciba kommerziell erhältlich ist; 2-[4,6-bis(2,4-dimethylphenyl)-1,3,5-triazin-2-yl]-5-(octyloxy)-phenol (CAS No. 2725-22-6), welches unter dem Namen Cyasorb® UV-1164 bei der Cytec Industries Inc. kommerziell erhältlich ist; Ethyl-2-cyano-3,3-diphenylacrylat (CAS No. 5232-99-5), welches unter dem Namen Uvinul® 3035 bei der BASF AG kommerziell erhältlich ist; 2-Ethylhexyl-2-cyano-3,3-diphenylacrylat (CAS No. 6197-30-4), welches unter dem Namen Uvinul® 3039 bei der BASF AG kommerziell erhältlich ist; 1,3-bis-[(2'-cyano-3',3'-diphenylacryloyl)oxy]-2,2-bis-{[(2'-cyano-3',3'-diphenylacryloyl)oxy]-methyl}-propan (CAS No. 178671-58-4), welches unter dem Namen Uvinul® 3030 bei der BASF AG kommerziell erhältlich ist; Tetra-ethyl-2,2'-(1,4-phenylen-dimethyliden)-bismalonat (CAS No. 6337-43-5), welches unter dem Namen Hostavin® B-CAP™ XP3030 bei der Clariant GmbH kommerziell erhältlich ist.

Die Basisschicht der erfindungsgemäßen Platten enthält entweder keinen UV-Absorber oder einen oder mehrere UV-Absorber ausgewählt aus folgenden Substanzklassen: Benztriazole, Cyanacrylate, Bismalonate.

Bevorzugt enthält die Basisschicht der erfindungsgemäßen einen oder mehrere UV-Absorber, besonders bevorzugt ausgewählt aus folgenden Substanzen: 2-(2H-benzotriazol-2-yl)-4-(1,1,3,3-tetramethylbutyl)-phenol (CAS No. 3147-75-9), welches unter dem Namen Tinuvin® 329 bei der Fa. Ciba oder unter dem Namen Uvinul® 3029 bei der BASF AG oder unter dem Namen Cyasorb® UV-5411 bei der Cytec Industries Inc. kommerziell erhältlich ist; 2-(2H-benzotriazol-2-yl)-4,6-bis(1-methyl-1-phenylethyl)-phenol (CAS No. 70321-86-7), welches unter dem Namen Tinuvin 234® bei der Fa. Ciba kommerziell erhältlich ist; 2-(5-chloro-2H-benzotriazol-2-yl)-6-(1,1-dimethylethyl)-4-methyl)-phenol (CAS No. 3896-11-5), welches unter dem Namen Tinuvin® 326 bei der Fa. Ciba oder unter dem Namen Uvinul®3026 bei der BASF AG kommerziell erhältlich ist; 2,2'-methylenebis[6-(2H-benzotriazol-2-yl)-4-(1,1,3,3-tetramethylbutyl)-phenol (CAS No. 103597-45-1), welches unter dem Namen Tinuvin® 360 bei der Fa. Ciba oder dem Namen ADK Stab LA31® bei der Firma Adeka-Palmarole kommerziell erhältlich ist; Ethyl-2-cyano-3,3-diphenylacrylat (CAS No. 5232-99-5), welches unter dem Namen Uvinul® 3035 bei der BASF AG kommerziell erhältlich ist; 2-Ethylhexyl-2-cyano-3,3-diphenylacrylat (CAS No. 6197-30-4), welches unter dem Namen Uvinul® 3039 bei der BASF AG kommerziell erhältlich ist; 1,3-bis-[(2'-cyano-3',3'-diphenylacryloyl)oxy]-2,2-bis-{[(2'-cyano-3',3'-diphenylacryloyl)oxy]methyl}-propan (CAS No. 178671-58-4), welches unter dem Namen Uvinul® 3030 bei der BASF AG kommerziell erhältlich ist; Tetra-ethyl-2,2'-(1,4-phenylen-dimethyliden)-bismalonat (CAS No. 6337-43-5), welches unter dem Namen Hostavin® B-CAP™ XP3030 bei der Clariant GmbH kommerziell erhältlich ist.

Der Gewichtsanteil des UV-Absorbers in der Deckschicht beträgt 0,50 Gew.-% - 11,00 Gew.-%, bevorzugt 1,00 Gew.-% - 3,00 Gew.-% und in einer speziellen Ausführungsform 4,00 Gew.-% - 8,00 Gew.-%, bezogen auf die Gesamtzusammensetzung der Deckschicht. Das Polycarbonat kann linear und/oder verzweigt sein, es kann auch Mischungen der oben genannten UV-Absorber enthalten, dann bezieht sich die UV-Absorber Gewichtsangabe auf die Summe der eingesetzten UV-Absorber. Soweit ein UV-Absorber in der Basisschicht eingesetzt wird, beträgt der Gewichtsanteil 0,01 Gew.-% - 1,00 Gew.-%, bevorzugt 0,10 Gew.-% - 0,50 Gew.-% bezogen auf die Gesamtzusammensetzung der Basisschicht.

Die erfindungsgemäßen Erzeugnisse, insbesondere Massivplatten oder Stegplatten, können auch weitere funktionale oder dekorative Schichten, beispielsweise hergestellt durch Coextrusion oder Beschichtungsverfahren, enthalten. Anwendungen der Erzeugnisse finden sich in den Bereichen Architekturverscheibung, insbesondere Bedachungen und Verglasungen von Schwimmbädern, Carports, Gewächshäusern, Industriekomplexen und privaten Gebäuden, sowie Lärmschutz- und Sichtschutzwände.

### Ausführungsbeispiele

### Verwendete Rohstoffe und Additive

Makrolon® DP1-1883 (neuer Name seit 2010: Makrolon® ET 3117) ist kommerziell erhältlich bei der Fa. Bayer MaterialScience AG. Es handelt sich um ein lineares Polycarbonat auf der Basis von Bisphenol-A mit einer Schmelze-Volumenfließrate (MVR) bestimmt nach ISO 1133 von 6,0 cm³/(10 min) bei 300 °C und 1,2 kg Belastung.

Makrolon® 1243 MAS 157 (neuer Name seit 2010: Makrolon® ET 3127) ist kommerziell erhältlich bei der Fa. Bayer MaterialScience AG. Makrolon® 1243 MAS 157 ist ein verzweigtes Polycarbonat auf der Basis von Bisphenol-A mit einer Schmelze-Volumenfließrate (MVR) nach ISO 1133 von 6,0 cm³/(10 min) bei 300 °C und 1,2 kg Belastung.

"Streuadditiv-Compound": Bei diesem Compound handelt es sich um ein Polycarbonat-Masterbatch basierend auf linearem Polycarbonat auf Basis Bisphenol A als Diphenol (mit einer Schmelze-Volumenfließrate (MVR) bestimmt nach ISO 1133 von 6,0 cm³/(10 min) bei 300 °C und 1,2 kg Belastung) enthaltend ein Streuadditiv aus Kern-Schale-Teilchen basierend auf Polymethylmethacrylat und Polybutylacrylat mit einer Teilchengröße von 2 bis 15 µm und einer mittleren Teilchengröße von 8 µm (Paraloid® EXL 5137 der Fa. Rohm & Haas) mit einem Anteil von ca. 20 Gew.-% (Streuadditiv).

Makrolon® DP1-1816 MAS 073 (neuer Name seit 2009: Makrolon® ET UV 510) ist ein lineares Polycarbonat auf der Basis von Bisphenol-A enthaltend UV-Absorber von der Firma Bayer MaterialScience AG mit einer Schmelze-Volumenfließrate (MVR) nach ISO1133 von 8,5 cm³/(10 min) bei 300 °C und 1,2 kg Belastung.

Bei Reofos® BAPP handelt es sich um Bisphenol-A-diphosphat (BDP) erhältlich von der Firma Chemtura (Indianapolis, USA) der Formel

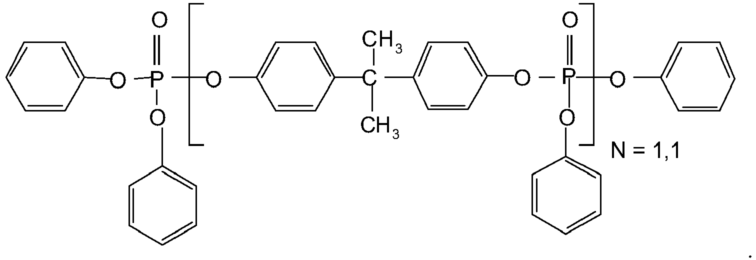

BC-52® ist ein Tetrabrombisphenol-A oligocarbonat (TBBOC) und erhältlich von der Firma Chemtura (Indianapolis, USA).

Herstellung der Polycarbonat-Zusammensetzungen für die Basisschichten in den unten genannten

### Beispielen:

Die Polycarbonatzusammensetzungen wurden durch Compoundierung hergestellt. Die Einrichtung zur Compoundierung besteht aus:
- Dosiereinrichtung für die Komponenten
- einem gleichlaufenden Zweiwellenkneter (ZSK 53 von der Firma Werner & Pfleiderer) mit einem Schneckendurchmesser von 53 mm
- einer Lochdüse zur Ausformung von Schmelzesträngen
- einem Wasserbad zur Abkühlung und dem Verfestigen der Stränge
- einem Granulator.

Bei der Herstellung der Compounds wurde so vorgegangen, dass zu den unten angegebenen Mengen an Makrolon® DP1-1883 eine Mischung aus Makrolon® 1243 MAS 157 und den unten angegebenen weiteren Zuschlagstoffen zudosiert wurde, so dass die in den Beispielen genannten Mischungen (Compounds) resultieren.

### Material für die Basisschicht des Beispiels 1 (milchweiß/transluzent):

77,5 % Makrolon® DP1-1883
17,5 % Makrolon® 1243 MAS 157
5 % Streuadditiv-Compound

### Material für die Basisschicht des Beispiels 2 (milchweiß/transluzent):

75,5 % Makrolon®DP1-1883
15,5 % Makrolon® 1243 MAS 157
5 % Streuadditiv-Compound
4 % BC-52®

### Material für die Basisschicht des Beispiels 3 (milchweiß/transluzent):

75 % Makrolon®DP1-1883
15 % Makrolon® 1243 MAS 157
5 % Streuadditiv-Compound
5 % Reofos® BAPP

### Material für die Basisschicht des erfindungsgemäßen Beispiels 4 (milchweiß/transluzent):

73 % Makrolon® DP1-1883
13 % Makrolon® 1243 MAS 157
5 % Streuadditiv-Compound
5 % Reofos® BAPP
4 % BC-52®

### Material für die Basisschicht des Beispiels 5 (transparent):

80 % Makrolon® DPI-1883
20 % Makrolon® 1243 MAS 157

### Material für die Basisschicht des Beispiels 6 (transparent):

78 % Makrolon® DPI-1883
18 % Makrolon® 1243 MAS 157
4 % BC-52®

### Material für die Basisschicht des Beispiels 7(transparent):

77,5 % Makrolon® DP1-1883
17,5 % Makrolon® 1243 MAS 157
5 % Reofos® BAPP

### Beispiel 8 (milchweiß/transluzent):

73 % Makrolon® DP1-1883
13 % Makrolon® 1243 MAS 157
5 % Streuadditiv-Compound
9 % Reofos® BAPP

Die Zusammensetzungen der Beispiele 1 - 7 wurden jeweils als Material für die Basisschicht für die Extrusion der Stegplatten verwendet. Die Gehäusetemperaturen des zur Herstellung der Basismaterialien verwendeten oben genannten Compoundierungs-Extruders betrugen in Zone 1 60 - 80 °C, in der Zone 2 140 - 160 °C und in den folgenden Zonen jeweils zwischen 280 und 305 °C. Der Durchsatz lag bei ca. 75 kg / h. Die Schmelzetemperatur betrug zwischen 340°C und 350°C. Die Dosierung des Reofos® BAPP erfolgte in aufgeschmolzener Form.

Aus der Zusammensetzung aus Beispiel 8 wurden keine Stegplatten hergestellt, da die Wärmeformbeständigkeit der Platte, bestimmt durch die VICAT-Temperatur der Zusammensetzung einen unakzeptabel niedrigen Wert aufwies. Die Vicat-Erweichungstemperatur wurde gemäß DIN ISO 306 ermittelt an Probekörpern (Flachstab) der Abmessung 80 x 10 x 4 mm. Es wurde der Vicat B unter einer Belastung von 50 N bei einer Aufheizrate von 120 K / h ermittelt.

Die nachfolgende Tabelle zeigt den Vicat B des Materials aus Beispiel 8 im Vergleich zu dem erfindungsgemäßen Beispiel 4.

**Tabelle 1.**

| **Beispiel Nr.** | **Vicat B [°C]** |
|---|---|
| 4 | 130 |
| 8 | 115 |

### Herstellung der Polycarbonat-Stegfünffachplatten

Es wurden Polycarbonat-Stegfünffachplatten mit Hilfe folgender Maschinen und Apparate hergestellt:
- einem Einschneckenextruder (Entgasungsextruder, Schneckendurchmesser 70 mm und einer Einschnecke der Länge 33 D, Einschnecke, Fa. Reifenhäuser, Troisdorf /Germany)
   Der Extruder ist mit einer Vakuum-Schmelzeentgasung ausgerüstet.
- einem 2-Schicht Coextrusionsadapter (Festadapter der Fa. Bexsol, Italy)
- einem 3-Zonen-Coextruder (Schneckendurchmesser 30 mm, Einschnecke der Länge 25 D, Fa. Omipa, Italy)
- einer Stegplattendüse der Breite 500 mm, für Stegplattendicken von 8 bis 45 mm der Fa. Bexsol, Italy
- einem zweiteiligen Vakuumkalibrator, Breite 500 mm, Länge 2x950 mm, Fa. Breyer, Singen/Germany
- einer Rollenbahn, Rollenbahnlänge (Abstand Kalibrator / Ablängung) 3,5 m
- einer Abzugseinrichtung
- einer Quertrenneinrichtung (Messer)
- einem Ablagetisch.

Als Deckschicht (einseitig) wurde in allen Beispielen 1 - 7 ein Material verwendet, welches lineares Polycarbonat und einen UV-Absorber auf Triazinbasis enthält. Dieses Material ist unter dem Handelsnamen Makrolon® DPI-1816 MAS 073 von der Firma Bayer MaterialScience AG erhältlich. Die Deckschicht erhält man durch Coextrusion.

Die einseitig mit einer Coextrusionsschicht versehenen Stegplatten (Beispiele 1 - 7) wurden wie folgt hergestellt: Das Polycarbonat-Granulat des Basismaterials wurde jeweils dem Fülltrichter des Hauptextruders zugeführt und über die Zylinder/Schnecke aufgeschmolzen und gefördert. Die Temperaturen der einzelnen Gehäuse des Hauptextruders lagen bei 240° bis 260°C, die resultierende Massetemperatur bei 240 - 255 °C. Die Wellendrehzahl lag zwischen 50 und 56 U/min. Das als Material für die einseitige Coextrusionsschicht verwendete Makrolon® DP1-1816 MAS 073 wurde dem Fülltrichter des Coextruders zugeführt. Die Gehäusetemperaturen des Coextruders lagen bei 265 °C, die Massetemperatur bei ca. 252 °C. Die Wellendrehzahl betrug 10 U / min.

Beide Materialschmelzen wurden im Coexadapter zusammengeführt und anschließend in einer speziellen Extrusionsdüse geformt, bei der es sich um eine Stegplattendüse zur Herstellung eines Hohlkammerprofils, bestehend aus einem Obergurt, einem Untergurt sowie 3 Mittelgurten handelt. Das Profil weist zudem Stege mit einem X-Profil auf. Die Abzugsgeschwindigkeit betrug 0,7 m/s. Die weiteren Einrichtungen der Anlagen dienten zum Transport, Ablängen und Ablegen der Platten.

Die mit Hilfe dieser Düse extrudierten Platten weisen eine Dicke von ca. 40 mm und eine Plattenbreite von 510 mm auf und haben ein Flächengewicht von 4,4 kg / m2. Die Deckschicht (aus der Coextrusion) enthält Makrolon® DP1-1816 MAS 073 in einer Dicke von 50 µm.Im Idealfall hat die resultierende Stegplatte das Profil wie in Abb. 1 beschrieben.

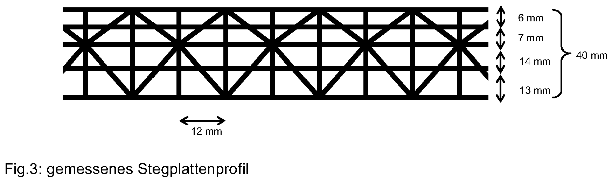

Es handelt sich bei den hergestellten Stegplatten um Fünffach-Stegplatten mit Abweichungen von der Idealgeometrie, die allerdings für das Flammschutzverhalten unerheblich sind. Vor allem die Plattendicke sowie das Flächengewicht sind entscheidende Parameter für das Flammverhalten. Zur Vollständigkeit wurde das resultierende Stegplattenprofil nochmals vermessen. Das Ergebnis ist in Figur 3 gezeigt. Die Coextrusionsschicht ist in der Abbildung nicht aufgeführt, sie befindet sich auf dem Obergurt in einer Dicke von 50 µm.

### Flammschutzprüfungen

Die Brandschachtprüfung nach DIN 4102 sieht folgende Bedingungen vor: 4 Proben der Abmessungen 19 cm x 100 cm x Originaldicke werden senkrecht und zueinander rechtwinklig angeordnet.

Nach 10-minütiger Beflammung mit einem Ringbrenner wird der Brenner abgeschaltet. Der Brandschachttest gilt als bestanden, wenn - bei einem Mittelwert der unzerstörten Restlängen von mindestens 150 mm und keiner vollständig verbrannten Probe (Restlänge 0 mm) - die mittlere Rauchgastemperatur 200°C nicht überschreitet.

Vor der Prüfung werden die Formteile in Normklima gelagert, bis sie gewichtskonstant sind. Alle Brandprüfungen wurden im zertifizierten Brandhaus der Currenta GmbH & Co. OHG, Leverkusen gemäß DIN 4102 durchgeführt. Als Flammschutzprüfung wurde der oben beschriebene Brandschachttest an den Platten basierend auf den Beispielen 1 - 7 (eingesetzt als Basismaterial) durchgeführt. Die Ergebnisse sind in der unten gezeigten Tabelle aufgeführt.

Als weiterer Flammschutztest wurde ein Tropftest nach NF P 92-505 durchgeführt. Dieser Test ist Bestandteil des Prüfungsprogramms nach französischen Baustoffvorschrift. Dieses Prüfprogramm unterteilt sich in den Kabinentest, die Elektrobrennerprüfung und den Tropftest. Je nach Material sind unterschiedliche Tests relevant. Hinsichtlich der Performance des thermoplastischen Materials ist hier vor allem der Tropftest von Wichtigkeit. Dabei wird die Probe in 30 mm Abstand zum Heizstrahler horizontal auf einem Rost angeordnet. Während der Prüfdauer von 10 Minuten wird das Entzündungs- und Abtropfverhalten beobachtet. Zündet die Probe während der ersten 5 Versuchsminuten, wird der Strahler bis zum Verlöschen der Flammen weggeschwenkt. Für die folgenden 5 Minuten wird die thermische Belastung, unabhängig von einer Entzündung, nicht unterbrochen. "Brennendes Abtropfen" liegt vor, wenn bei mindestens einem von 4 Versuchen die 300 mm unterhalb der Probe liegende Zellstoffwatte entzündet wird. Brennendes Abtropfen führt zu zur Einstufung "nicht bestanden".

**Tabelle 2**

| **Stegplatte aus Beispiel** | **Brandschacht** | | | **Tropftest** |
|---|---|---|---|---|
| | **DIN 4102-B1** | **Max. Durchschnittsrauchgastemperatur [°C]** | **Max. Absorptions-Integral [%*min]** | **NF P 92-505** |
| **1** | Nicht bestanden | > 300 | - | Nicht bestanden |
| **2** | Nicht bestanden | > 300 | - | bestanden |
| **3** | bestanden | 120,7 | 82,3 | Nicht bestanden |
| **4** | bestanden | 117,9 | 102,3 | bestanden |
| **5** | bestanden | 136,3 | 100,7 | Nicht bestanden |
| **6** | bestanden | 127,8 | 52,03 | bestanden |
| **7** | bestanden | 126,6 | 25,39 | bestanden |

Platten ohne Streuadditiv (Beispiele 5 -7) bestehen die Flammschutzprüfung bereits bei Zusatz eines der Flammschutzadditive auf Basis TBBOC oder BDP alleine. Für milchweiß/transluzent gefärbte Platten enthaltend Streuadditiv ist jedoch die erfindungsgemäße Kombination aus Flammschutzmitteln notwendig (Beispiel 4), um die relevanten Flammschutzprüfungen zu bestehen. Hier reichen die Flammschutzmittel einzeln gemäß Stand der Technik nicht aus.

Sehr hohe Gehalte der einzelnen Flammschutzmittel sind im Falle des bromhaltigen BC-52 wirtschaftlich aufgrund dessen hohen Preises nicht sinnvoll. Darüber hinaus ist dem Fachmann bekannt, dass hohe Bromgehalte unter anderem in der Verarbeitung von Thermoplasten unerwünscht sind, sie neigen bei der Verarbeitung zur Ausdünstung korrosiver und gesundheitsschädlicher Bromdämpfe.

Die Verwendung hoher Gehalte phosphorhaltiger Flammschutzmittel wie Reofos® BAPP führt zu inakzeptabel niedrigen Wärmeformbeständigkeiten, bestimmt z.B. durch die Vicat-Temperatur (siehe Beispiel 8), die den Anforderungen an die Polycarbonat-Platten nicht mehr gerecht werden.

## Patentansprüche

1. Zusammensetzung enthaltend aromatisches Polycarbonat und
a) 1,60 Gew.-% - 4,00 Gew.-% mindestens eines Acrylat-basierten Streuadditivs, wobei der durchschnittliche Teilchendurchmesser 2 bis 15 µm beträgt,
b) 2,00 Gew.-% - 5,00 Gew.-% mindestens eines bromierten Flammschutzmittels, wobei das bromierte Flammschutzmittel ein Tetrabromo-Bisphenol-A Oligomer ist, und
c) 2,50 Gew.-% - 5,50 Gew.-% mindestens eines Phosphor-basierten Flammschutzmittels, wobei das aromatische Polycarbonat eine Mischung aus verzweigtem und linearem Polycarbonat ist und wobei mindestens 70 Gew.-% lineares Polycarbonat und mindestens 10,00 Gew.-% verzweigtes Polycarbonat enthalten sind.

2. Zusammensetzung gemäß Anspruch 1, **dadurch gekennzeichnet, dass** das Phosphor-basierte Flammschutzmittel ausgewählt ist aus der Gruppe enthaltend eine oder mehrere Verbindungen der allgemeinen Formel (4) 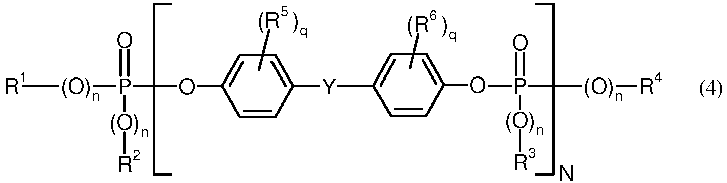 worin
R¹, R², R³ und R⁴, unabhängig voneinander gegebenenfalls durch Halogen substituiertes C₁-C₈-Alkyl, jeweils gegebenenfalls durch Halogen und bzw. oder Alkyl substituiertes C₅-C₆-Cycloalkyl, C₆-C₁₀-Aryl oder C₇-C₁₂-Aralkyl,
n unabhängig voneinander 0 oder 1,
q unabhängig voneinander 0, 1, 2, 3 oder 4,
bedeuten und
N 0, 60 bis 4,00, vorzugsweise 0,90 bis 2,50, insbesondere 1,00 bis 1,15 ist,
R⁵ und R⁶ unabhängig voneinander C₁-C₄-Alkyl, vorzugsweise Methyl oder Halogen, vorzugsweise Chlor und/oder Brom bedeuten, und
Y C₁-C₇-Alkyliden, C₁-C₇-Alkylen, C₅-C₁₂-Cycloalkylen, C₅-C₁₂-Cycloalkyliden, -O-, - S-, -SO-, -SO₂-, -CO- oder einen Rest der Formel (5) oder (6) 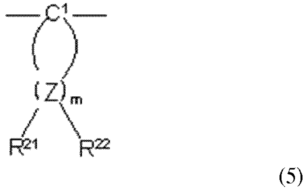 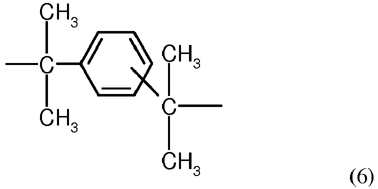 mit
Z = Kohlenstoff und
R²¹ und R²² für jedes Z individuell wählbar, unabhängig voneinander Wasserstoff oder C1-C6-Alkyl, vorzugsweise Wasserstoff, Methyl oder Ethyl,
m eine ganze Zahl von 4 bis 7, bevorzugt 4 oder 5,
mit der Maßgabe, dass an mindestens einem Atom Z R²¹ und R²² gleichzeitig Alkyl sind, bedeutet.

3. Zusammensetzung nach Anspruch 2, wobei das phosphathaltige Flammschutzmittel Bisphenol-A-diphosphat ist.

4. Zusammensetzung gemäß einem der vorangehenden Ansprüche, **dadurch gekennzeichnet, dass** das Streuadditiv ausgewählt ist aus der Gruppe enthaltend Kern-Schale-Polymer auf Basis Polymethylacrylat und Polybutylacrylat, teilvernetzte spherische Acrylatpartikel, vollvernetzte spherische Acrylatpartikel, teilvernetzte nicht-spherische Acrylatpartikel und vollvernetzte nicht-spherische Acrylatpartikel.

5. Platte enthaltend eine Zusammensetzung gemäß einem der Ansprüche 1-4.

6. Platte nach Anspruch 5, wobei die Platte eine Massiv- oder Stegplatte ist.

7. Platte nach Anspruch 6, **dadurch gekennzeichnet, dass** es sich um eine mehrschichtige Platte handelt und die Zusammensetzung in der Basisschicht enthaltend ist.

8. Platte nach Anspruch 6 oder 7, zusätzlich enthaltend mindestens eine coextrudierte Deckschicht enthaltend UV-Absorber.

9. Platte gemäß Anspruch 8, wobei der UV-Absorber in der Deckschicht ausgewählt ist aus einem oder mehreren Verbindungen der Gruppe enthaltend Triazine, Benztriazole, Cyanacrylate und Bismalonate und die Basisschicht keinen UV-Absorber oder einen oder mehrere UV-Absorber ausgewählt aus der Gruppe enthaltend Benztriazole, Cyanacrylate und Bismalonate enthält.

10. Platte nach einem oder mehreren der voranstehenden Ansprüche, **dadurch gekennzeichnet, dass** diese sowohl den Brandschachttest gemäß DIN 4102 B1 als auch den Tropftest gemäß NF P 92-505 besteht.

11. Herstellung einer Platte nach Anspruch 7 durch Coextrusion.

12. Verwendung von Zusammensetzungen gemäß einem oder mehreren der Ansprüche 1 bis 4 zur Vermeidung eines brennenden Abtropfens sowie zur Reduzierung der maximalen Rauchgastemperatur im Brandfall im Vergleich zu nicht erfindungsgemäß ausgerüsteten Zusammensetzungen bei extrudierten Platten.

## Claims

1. Composition containing aromatic polycarbonate and
a) 1.60 wt.%-4.00 wt.% of at least one acrylate-based scattering additive, where the average particle diameter is from 2 to 15 µm
b) 2.00 wt.%-5.00 wt.% of at least one brominated flame retardant, where the brominated flame retardant is a tetrabromobisphenol A oligomer, and
c) 2.50 wt.%-5.50 wt.% of at least one phosphorus-based flame retardant, wherein the aromatic polycarbonate is a mixture of branched and linear polycarbonate and wherein at least 70 wt.% of linear polycarbonate and at least 10.00 wt.% of branched polycarbonate are present.

2. Composition according to claim 1, **characterised in that** the phosphorus-based flame retardant is selected from the group containing one or more compounds of the general formula (4) 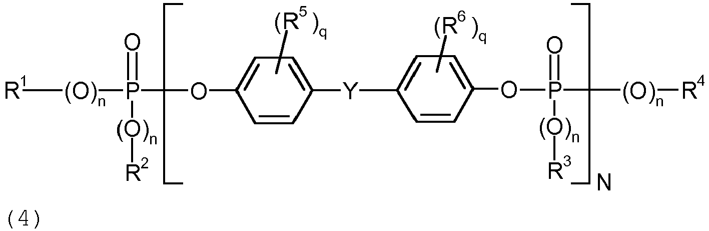 wherein
R¹, R², R³ and R⁴ independently of one another denote C₁-C₈-alkyl optionally substituted by halogen, C₅-C₆-cycloalkyl, C₆-C₁₀-aryl or C₇-C₁₂-aralkyl each optionally substituted by halogen and/or by alkyl,
the substituents n independently of one another denote 0 or 1,
the substituents q independently of one another denote 0, 1, 2, 3 or 4,
and
N is from 0.60 to 4.00, preferably from 0.90 to 2.50, in particular from 1.00 to 1.15,
R⁵ and R⁶ independently of one another denote C₁-C₄-alkyl, preferably methyl, or halogen, preferably chlorine and/or bromine, and
Y denotes C₁-C₇-alkylidene, C₁-C₇-alkylene, C₅-C₁₂-cycloalkylene, C₅-C₁₂-cycloalkylidene, - O-, -S-, -SO-, -SO₂-, -CO- or a radical of formula (5) or (6) 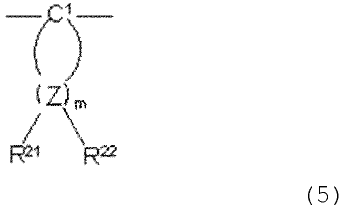 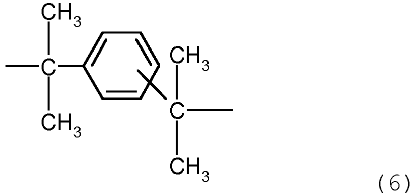 wherein
Z = carbon and
R²¹ and R²² can be selected individually for each Z and independently of one another denote hydrogen or C1-C6-alkyl, preferably hydrogen, methyl or ethyl,
m is an integer from 4 to 7, preferably 4 or 5, with the proviso that on at least one atom Z R²¹ and R²² are simultaneously alkyl.

3. Composition according to claim 2, wherein the phosphate-containing flame retardant is bisphenol A diphosphate.

4. Composition according to any one of the preceding claims, **characterised in that** the scattering additive is selected from the group containing core-shell polymers based on polymethyl acrylate and polybutyl acrylate, partially crosslinked spherical acrylate particles, fully crosslinked spherical acrylate particles, partially crosslinked non-spherical acrylate particles and fully crosslinked non-spherical acrylate particles.

5. Sheet containing a composition according to any one of claims 1 to 4.

6. Sheet according to claim 5, wherein the sheet is a solid sheet or a multiwall sheet.

7. Sheet according to claim 6, **characterised in that** it is a multilayer sheet and the composition is present in the base layer.

8. Sheet according to claim 6 or 7, additionally containing at least one coextruded cover layer containing UV absorber.

9. Sheet according to claim 8, wherein the UV absorber in the cover layer is selected from one or more compounds of the group containing triazines, benztriazoles, cyanoacrylates and bismalonates and the base layer does not contain UV absorber or contains one more UV absorbers selected from the group containing benztriazoles, cyanoacrylates and bismalonates.

10. Sheet according to one or more of the preceding claims, **characterised in that** it passes both the fire shaft test according to DIN 4102 B1 and the dripping test according to NF P 92-505.

11. Production of a sheet according to claim 7 by coextrusion.

12. Use of compositions according to one or more of claims 1 to 4 for avoiding flaming dripping and for reducing the maximum flue gas temperature in the event of fire as compared with compositions not finished according to the invention in extruded sheets.

## Revendications

1. Composition, contenant un polycarbonate aromatique et
a) 1,60 % en poids à 4,00 % en poids d'au moins un additif de dispersion à base d'acrylate, le diamètre de particule moyen étant de 2 à 15 µm,
b) 2,00 % en poids à 5,00 % en poids d'au moins un agent ignifuge bromé, l'agent ignifuge bromé étant un oligomère de tétrabromo-bisphénol A, et
c) 2,50 % en poids à 5,50 % en poids d'au moins un agent ignifuge à base de phosphore,
le polycarbonate aromatique étant un mélange d'un polycarbonate ramifié et linéaire, et au moins 70 % en poids de polycarbonate linéaire et au moins 10,00 % en poids de polycarbonate ramifié étant contenus.

2. Composition selon la revendication 1, **caractérisée en ce que** l'agent ignifuge à base de phosphore est choisi dans le groupe contenant un ou plusieurs composés de formule générale (4) : 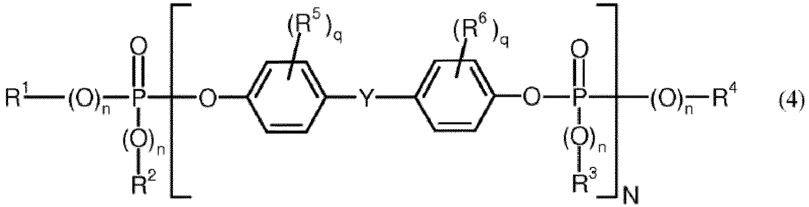 dans laquelle
R¹, R², R³ et R⁴ signifient indépendamment les uns des autres alkyle en C₁-C₈ éventuellement substitué par halogène ; cycloalkyle en C₅-C₆, aryle en C₆-C₁₀ ou aralkyle en C₇-C₁₂, chacun éventuellement substitués par halogène et/ou alkyle,
les n signifient indépendamment les uns des autres 0 ou 1,
les q signifient indépendamment les uns des autres 0, 1, 2, 3 ou 4,
et
N signifie 0,60 à 4,00, de préférence 0,90 à 2,50, notamment 1,00 à 1,15,
R⁵ et R⁶ signifient indépendamment l'un de l'autre alkyle en C₁-C₄, de préférence méthyle ou halogène, de préférence chlore et/ou brome, et
Y signifie alkylidène en C₁-C₇, alkylène en C₁-C₇, cycloalkylène en C₅-C₁₂, cycloalkylidène en C₅-C₁₂, -O-, -S-, -SO-, -SO₂-, -CO- ou un radical de formule (5) ou (6) : 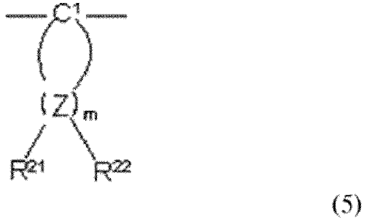 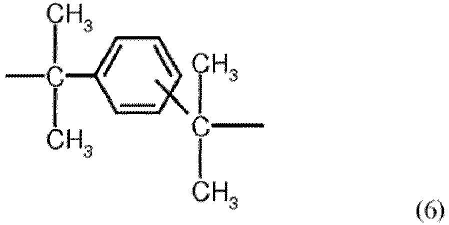 dans lesquelles
Z = carbone et
R²¹ et R²² peuvent être choisis individuellement pour chaque Z, et signifient indépendamment les uns des autres hydrogène ou alkyle en C₁-C₆, de préférence hydrogène, méthyle ou éthyle,
m signifie un nombre entier de 4 à 7, de préférence 4 ou 5,
à condition que R²¹ et R²² représentent simultanément un alkyle sur au moins un atome Z.

3. Composition selon la revendication 2, dans laquelle l'agent ignifuge contenant du phosphate est le diphosphate de bisphénol A.

4. Composition selon l'une quelconque des revendications précédentes, **caractérisée en ce que** l'additif de dispersion est choisi dans le groupe contenant un polymère noyau-enveloppe à base de polyacrylate de méthyle et de polyacrylate de butyle, une particule d'acrylate sphérique partiellement réticulée, une particule d'acrylate sphérique entièrement réticulée, une particule d'acrylate non sphérique partiellement réticulée et une particule d'acrylate non sphérique entièrement réticulée.

5. Plaque contenant une composition selon l'une quelconque des revendications 1 à 4.

6. Plaque selon la revendication 5, dans laquelle la plaque est une plaque massive ou alvéolaire.

7. Plaque selon la revendication 6, **caractérisée en ce qu'**il s'agit d'une plaque multicouche et la composition est contenue dans la couche de base.

8. Plaque selon la revendication 6 ou 7, contenant en outre au moins une couche de recouvrement co-extrudée contenant un absorbeur UV.

9. Plaque selon la revendication 8, dans laquelle l'absorbeur UV dans la couche de recouvrement est choisi parmi un ou plusieurs composés du groupe contenant les triazines, les benzotriazoles, les cyano-acrylates et les bismalonates, et la couche de base ne contient pas d'absorbeur UV ou contient un ou plusieurs absorbeurs UV choisis dans le groupe contenant les benzotriazoles, les cyano-acrylates et les bismalonates.

10. Plaque selon une ou plusieurs des revendications précédentes, **caractérisée en ce que** celle-ci réussit aussi bien le test du foyer selon DIN 4102 B1, que le test d'égouttement selon NF P 92-505.

11. Fabrication d'une plaque selon la revendication 7 par co-extrusion.

12. Utilisation de compositions selon une ou plusieurs des revendications 1 à 4 pour éviter un égouttement brûlant et pour réduire la température maximale des gaz de fumée en cas d'incendie en comparaison de compositions non traitées selon l'invention dans des plaques extrudées.
